(19) Europäisches Patentamt
European Patent Office
Office européen des brevets

(11) EP 4 653 475 A1

(12) EUROPEAN PATENT APPLICATION
published in accordance with Art. 153(4) EPC

(43) Date of publication:
26.11.2025 Bulletin 2025/48

(21) Application number: 24886379.7

(22) Date of filing: 01.11.2024

(51) International Patent Classification (IPC):
*C08F 36/06* (2006.01) *C08F 4/52* (2006.01)
*C08F 2/00* (2006.01) *C08F 136/06* (2006.01)

(52) Cooperative Patent Classification (CPC):
**C08F 2/00; C08F 4/52; C08F 4/54; C08F 36/06; C08F 136/06; C08L 9/00**

(86) International application number:
**PCT/KR2024/017098**

(87) International publication number:
**WO 2025/095709 (08.05.2025 Gazette 2025/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **01.11.2023 KR 20230149216**
**28.02.2024 KR 20240028978**

(71) Applicant: **LG CHEM, LTD.**
**Seoul 07336 (KR)**

(72) Inventors:
- **KANG, Suk Youn**
  **Daejeon 34122 (KR)**
- **LEE, Tae Chul**
  **Daejeon 34122 (KR)**
- **CHOI, Seo Won**
  **Daejeon 34122 (KR)**
- **SOHN, Hae Sung**
  **Daejeon 34122 (KR)**
- **PARK, Sung Ho**
  **Daejeon 34122 (KR)**

(74) Representative: **Vossius & Partner Patentanwälte Rechtsanwälte mbB**
**Siebertstrasse 3**
**81675 München (DE)**

# (54) CONJUGATED DIENE-BASED POLYMER AND RUBBER COMPOSITION

(57) The present invention relates to a conjugated diene-based polymer that maintains the physical properties of the conjugated diene-based polymer, except for processability, at the level of a highly linear conjugated diene-based polymer by introducing a branch into the linear conjugated diene-based polymer, thereby exhibiting improved processability while maintaining the mixing properties in a rubber composition at a high level, and a rubber composition comprising the same.



Processed by Luminess, 75001 PARIS (FR)

## Description

## TECHNICAL FIELD

[Cross-reference to Related Applications]

This application claims the benefit of Korean Patent Application Nos. 10-2023-0149216, filed on November 1, 2023, and 10-2024-0028978, filed on February 28, 2024, in the Korean Intellectual Property Office, the contents of which are incorporated herein by reference.

[Technical Field]

The present invention relates to a conjugated diene-based polymer and a rubber composition comprising the same.

## BACKGROUND ART

Recently, as interest in energy conservation and environmental issues has increased, the decrease of fuel efficiency of automobiles has been demanded. As one of the methods for realizing the requirement, a method of narrowing molecular weight distribution while increasing the cis bond content and linearity of polybutadiene in a rubber composition for forming tires has been proposed.

Polybutadiene may be prepared using a Ziegler-Natta catalyst, and the Ziegler-Natta catalyst is prepared by activating an organic acid metal compound with an alkyl aluminum and a halogenated alkyl aluminum compound, and the prepared catalyst is reacted with a 1,3-butadiene monomer to prepare polybutadiene.

Here, the organic acid metal compound includes titanium-based, nickel-based, cobalt-based, and lanthanum-based compounds, and lanthanide rare earth element compounds are mainly used from the viewpoint of increasing the cis bond content and linearity of polybutadiene while narrowing the molecular weight distribution.

Representative examples of the lanthanide rare earth element compound include neodymium-based compounds, and specific examples include NdV (neodymium versatate). The lanthanide rare earth element compound undergoes an alkylation reaction using an alkyl aluminum compound, and then undergoes a halogenation reaction using a halogenated alkyl aluminum compound for activation. In order to stabilize the catalyst, a 1,3-butadiene monomer is added during the alkylation reaction to perform preforming.

However, polybutadiene produced from the catalyst produced using the lanthanide rare earth element compound, especially neodymium-based compound, has high physical properties, but has high linearity and thus poor processability.

[Prior Art Document]

[Patent Document]

(Patent Document 1) US 9056303 B2

## DETAILED DESCRIPTION OF THE INVENTION

## TECHNICAL PROBLEM

The problem to be solved in the present invention is to improve the processability while maintaining the physical properties of a conjugated diene-based polymer at the level of highly linear polybutadiene.

That is, in order to solve the problems mentioned in the background art of the invention, the present invention aims to provide a conjugated diene-based polymer maintaining the physical properties of the conjugated diene-based polymer, excluding the processability, at the level of a highly linear conjugated diene-based polymer, thereby improving processability while maintaining the mixing properties in a rubber composition at a high level.

In addition, the present invention aims to provide a rubber composition including the conjugated diene-based polymer.

## TECHNICAL SOLUTION

To solve the above tasks, the present invention provides a conjugated diene-based polymer and a rubber

composition.

(1) The present invention provides a conjugated diene-based polymer comprising a conjugated diene-based monomer unit, having a cis bond content of 95.0 wt% or more, having molecular weight distribution (Mw/Mn) of 2.3 to 2.8, and having a height retention ratio ($\Delta H@_{20°C}$) calculated by Equation 1 below of 30% or more.

[Equation 1]

$$\Delta H_{@20°C}\ (\%) = (H_{8@20°C}/H_{0@20°C}) \times 100$$

In Equation 1,

$H_{0@20°C}$ is an initial height measured by preparing a sample by molding 2.5 g of a conjugated diene-based polymer at 100°C into a cylindrical shape with a diameter of 15 mm and a height of 12 mm, and cooling the sample to a temperature of 20°C, and
$H_{8@20°C}$ is a height of the sample measured after 8 minutes of applying a load of 5 kg to an upper surface of the sample while maintaining the temperature of 20°C.

(2) The present invention provides the conjugated diene-based polymer according to (1), wherein the height retention ratio ($\Delta H_{@20°C}$) calculated by Equation 1 is 35% or more.
(3) The present invention provides the conjugated diene-based polymer according to (1) or (2), wherein a height retention ratio ($\Delta H_{@40°C}$) calculated by Equation 2 below is 18% or more.

[Equation 2]

$$\Delta H_{@40°C}\ (\%) = (H_{8@40°C}/H_{0@40°C}) \times 100$$

In Equation 2,

$H_{0@40°C}$ is an initial height measured by preparing a sample by molding 2.5 g of a conjugated diene-based polymer at 100°C into a cylindrical shape with a diameter of 15 mm and a height of 12 mm, and cooling the sample to a temperature of 40°C, and
$H_{8@40°C}$ is a height of the sample measured after 8 minutes of applying a load of 5 kg to an upper surface of the sample while maintaining the temperature of 40°C.

(4) The present invention provides the conjugated diene-based polymer according to (3), wherein the height retention ratio ($\Delta H_{@40°C}$) calculated by Equation 2 is 24% or more.
(5) The present invention provides the conjugated diene-based polymer according to any one of (1) to (4), wherein a beta value measured at 100°C is 0.2 or less.
(6) The present invention provides the conjugated diene-based polymer according to any one of (1) to (5), wherein the molecular weight distribution (Mw/Mn) is 2.5 to 2.8.
(7) The present invention provides the conjugated diene-based polymer according to any one of (1) to (6), wherein a mooney viscosity (ML1+4 @100°C) measured at 100°C is 40 to 50.
(8) The present invention provides the conjugated diene-based polymer according to any one of (1) to (7), wherein a weight average molecular weight is 500,000 g/mol to 800,000 g/mol.
(9) The present invention provides a rubber composition comprising the conjugated diene-based polymer according to any one of (1) to (8).

## EFFECTS OF THE INVENTION

The conjugated diene-based polymer of the present invention maintains the physical properties of the conjugated diene-based polymer, except for processability, at the level of a highly linear conjugated diene-based polymer by introducing a branch into the linear conjugated diene-based polymer, thereby exhibiting improved processability while

maintaining the mixing properties in a rubber composition at a high level.

## MODE FOR CARRYING OUT THE INVENTION

Hereinafter, the present invention will be described in more detail to assist the understanding of the present invention.

It will be understood that words or terms used in the present disclosure and claims shall not be interpreted as the meaning defined in commonly used dictionaries. The words or terms should be interpreted as having a meaning that is consistent with their meaning in the technical idea of the invention, based on the principle that an inventor may properly define the meaning of the words or terms to best explain the invention.

Measurement Method

In this specification, the "1,4-cis bond content (wt%)" is the content of cis-1,4 bonds in a conjugated diene moiety measured by Fourier transform infrared spectroscopy (FT-IR). The FT-IR transmittance spectrum of a carbon disulfide solution of a conjugated diene-based polymer prepared at a concentration of 5 mg/mL was measured using carbon disulfide of the same cell as a blank, and each content was obtained using the maximum peak value (a, baseline) around 1130 $cm^{-1}$ of the measured spectrum, the minimum peak value (b) around 967 $cm^{-1}$ indicating a trans-1,4 bond, the minimum peak value (c) around 911 $cm^{-1}$ indicating a vinyl bond, and the minimum peak value (d) around 736 $cm^{-1}$ indicating a cis-1,4 bond.

In this specification, the "Mooney viscosity (ML1+4, @100°C)" was measured using a Monsanto MV2000E Large Rotor at 100°C, with a Rotor Speed of 2±0.02 rpm, after leaving a polymer at room temperature (23±3°C) for 30 minutes or more, collecting 27±3 g and filling it inside a die cavity, and applying torque by operating the platen.

In this specification, the "beta value (β-value)" represents the degree of branching of a polymer as a function of frequency. A smaller beta value means an increase in the degree of branching, while a larger value means a decrease in the degree of branching. By using Montech's D-RPA 3000 (Rubber Process Analyzer), tan δ was measured at a frequency sweep range of 0 to 100 Hz, a static strain of 3%, a dynamic strain of 0.25%, and a measurement temperature of 100°C, and the slope of d(log(tan δ))/d(log(freq)) was expressed as the beta value. Here, tan δ is an indicator indicating general viscoelastic properties, and is a value expressed as a ratio of a viscous modulus (G") to an elastic modulus (G').

In this specification, the "weight average molecular weight (Mw)", "number average molecular weight (Mn)", and "molecular weight distribution (MWD)" were measured using gel permeation chromatography (GPC) after dissolving a polymer in tetrahydrofuran (THF) at 40°C conditions for 30 minutes. In this case, two PLgel Olexis columns and one PLgel mixed-C column from Polymer Laboratories were used in combination. In addition, all newly replaced columns used mixed bed type columns, and polystyrene was used as a gel permeation chromatography standard material (GPC Standard material).

In this specification, viscoelasticity analysis according to frequency change was measured using a DHR-2 rheometer from TA Instruments and a parallel plate with a diameter of 8 mm under conditions of 120°C, 0.1% strain, and an angular frequency ranging from 0.01 rad/s to 100 rad/s.

## Conjugated Dien-based Polymer

The present invention provides a conjugated diene-based polymer having improved processability characteristics while maintaining excellent physical properties in terms of tensile properties, viscoelastic properties, and abrasion resistance of a highly linear conjugated diene-based polymer.

According to an embodiment of the present invention, the conjugated diene-based polymer may be a linear conjugated diene-based polymer introducing a branch chain (branch). In this case, the branch chain (branch) is a branch formed without adding a monomer, a modifier, or the like containing the branch chain (branch), and in the present invention, the branch is defined based on the beta value described below and the height retention ratio calculated by Equation 1.

According to an embodiment of the present invention, the conjugated diene-based polymer may include a conjugated diene-based monomer unit, have a 1,4-cis bond content of 95.0 wt% or more, have molecular weight distribution (Mw/Mn) of 2.3 to 2.8, and have a height retention ratio ($\Delta H_{@20°C}$) calculated by Equation 1 of 30% or more.

[Equation 1]

$$\Delta H_{@20°C}\ (\%) = (H_{8@20°C} / H_{0@20°C}) \times 100$$

In Equation 1,

$H_{0@20°C}$ is an initial height measured by preparing a sample by molding 2.5 g of a conjugated diene-based polymer at 100°C into a cylindrical shape with a diameter of 15 mm and a height of 12 mm, and cooling the sample to a temperature of 20°C, and

$H_{8@20°C}$ is a height of the sample measured after 8 minutes of applying a load of 5 kg to the upper surface of the sample while maintaining the temperature of 20°C.

Polybutadiene is generally prepared by polymerizing a 1,3-butadiene monomer using a Ziegler-Natta catalyst which is prepared by activating an organic acid metal compound with alkyl aluminum and halogenated alkyl aluminum compounds. Here, a lanthanide rare earth element compound, for example, a neodymium-based compound, is widely used as one of the organic acid metal compounds, and after an alkylation reaction using an alkyl aluminum compound, the organic acid metal compound is activated through a halogenation reaction using a halogenated alkyl aluminum compound, and in order to stabilize the catalyst, a 1,3-butadiene monomer is sometimes added during the alkylation reaction to perform preforming. However, polybutadiene prepared from a catalyst prepared using the lanthanide rare earth element compounds, especially neodymium compounds, has high compounding properties such as tensile properties, viscoelastic properties, and abrasion resistance, but has a problem of considerably poor compounding processability due to high linearity.

The conjugated diene-based polymer according to the present invention is prepared using a lanthanide rare earth element compound as a main catalyst, and by controlling a catalyst composition and polymerization conditions, a branch chain is introduced into the structure of the polymer chain formed by polymerization, thereby maintaining excellent compounding properties such as tensile properties, viscoelastic properties, and abrasion resistance originally expressed due to high linearity, while at the same time improving compounding processability.

According to an embodiment of the present invention, the conjugated diene-based polymer may include a conjugated diene-based monomer unit, and may have a 1,4-cis bond content of 95.0 wt% or more, molecular weight distribution (Mw/Mn) of 2.3 to 2.8, and a height retention ratio ($\Delta H_{@20°C}$) calculated by Equation 1 above of 30% or more.

According to an embodiment of the present invention, the conjugated diene-based polymer may include a conjugated diene-based monomer unit. The conjugated diene-based monomer unit refers to a repeating unit formed by polymerization of a conjugated diene-based monomer.

According to an embodiment of the present invention, the conjugated diene-based polymer may include 80 wt% or more, 85 wt% or more, 90 wt% or more, 95 wt% or more, or 100 wt% of a 1,3-butadiene monomer unit, and optionally 20 wt% or less, 15 wt% or less, 10 wt% or less, or 5 wt% or less of other conjugated diene-based monomer units copolymerizable with the 1,3-butadiene monomer, and within the range, a decrease in the cis-1,4 bond content in the conjugated diene-based polymer may be prevented. The 1,3-butadiene monomer may be 1,3-butadiene or a derivative thereof, such as 1,3-butadiene, 2,3-dimethyl-1,3-butadiene or 2-ethyl-1,3-butadiene, and the other conjugated diene-based monomers copolymerizable with the 1,3-butadiene may be 2-methyl-1,3-pentadiene, 1,3-pentadiene, 3-methyl-1,3-pentadiene, 4-methyl-1,3-pentadiene, 1,3-hexadiene or 2,4-hexadiene.

According to an embodiment of the present invention, the conjugated diene-based polymer may be a conjugated diene-based polymer catalyzed by a catalyst composition including a lanthanide rare earth element compound. That is, the conjugated diene-based polymer may be a conjugated diene-based polymer including an organometallic moiety activated by a catalyst composition including a neodymium compound.

In addition, the conjugated diene-based polymer has the 1,4-cis bond content of 95.0 wt% or more, 95.1 wt% or more, 95.2 wt% or more, 95.3 wt% or more, 95.4 wt% or more, 95.5 wt% or more, 95.6 wt% or more, 95.7 wt% or more, 95.8 wt% or more, 95.9 wt% or more, 96.0 wt% or more, 96.1 wt% or more, 96.2 wt% or more, 96.3 wt% or more, 96.4 wt% or more, 96.5 wt% or more, 96.6 wt% or more, 96.7 wt% or more, 96.8 wt% or more, 96.9 wt% or more, 97.0 wt% or more, 97.1 wt% or more, 97.2 wt% or more, 97.3 wt% or more, 97.4 wt% or more, or 97.5 wt% or more, and also may be 100.0 wt% or less, 99.5 wt% or less, or 99.0 wt% or less.

In addition, the conjugated diene-based polymer may have molecular weight distribution (Mw/Mn) of 2.3 to 2.8, and specifically, 2.4 to 2.8 or 2.5 to 2.8. The molecular weight distribution may be calculated from the ratio (Mw/Mn) of a weight average molecular weight (Mw) to a number average molecular weight (Mn). In this case, the number average molecular weight (Mn) is a common average of individual polymer molecular weights calculated by measuring the molecular weights of n polymer chains, obtaining the sum of the molecular weights, and dividing the sum by n, and the weight average molecular weight (Mw) represents the molecular weight distribution of a polymer composition. All molecular weight averages may be expressed in grams per mole (g/mol). In addition, the weight average molecular weight and the number average molecular weight may each mean a polystyrene-converted molecular weight analyzed by gel permeation chromatography (GPC). If the molecular weight distribution is satisfied, the tensile properties and viscoelastic properties of a rubber composition including the conjugated diene-based polymer may be excellently balanced.

According to an embodiment of the present invention, the conjugated diene-based polymer may have a number average molecular weight of 200,000 g/mol or more, and 400,000 g/mol or less. Within the range, if applied to a rubber

composition, the tensile properties are excellent, and the processability is excellent, so that the workability of the rubber composition is improved, making kneading easy, and thus the mechanical properties and property balance of the rubber composition are excellent.

According to an embodiment of the present invention, the conjugated diene-based polymer may have a weight average molecular weight of 500,000 g/mol or more and 800,000 g/mol or less. Within the range, if applied to a rubber composition, the tensile properties are excellent, and the processability is excellent, so that the workability of the rubber composition is improved, making kneading easy, and the mechanical properties and property balance of the rubber composition are excellent.

According to an embodiment of the present invention, if the conjugated diene-based polymer satisfies the molecular weight distribution, weight average molecular weight (Mw), and number average molecular weight conditions at the same time, if applied to a rubber composition, the tensile properties, viscoelasticity, and processability of the rubber composition are excellent, and the property balance among them is excellent.

In addition, the conjugated diene-based polymer according to an embodiment of the present invention may have a height retention ratio ($\Delta H_{@20°C}$) calculated by Equation 1 of 30% or more, and specifically, 35% or more, 38% or more, or 40% or more.

In addition, the conjugated diene-based polymer may have a height retention ratio ($\Delta H_{@20°C}$) calculated by Equation 1 of 50% or less, and specifically, 48% or less or 45% or less.

In addition, the conjugated diene-based polymer according to an embodiment of the present invention may have a height retention ratio ($\Delta H_{@40°C}$) calculated by Equation 2 of 18% or more, and specifically, 20% or more, 24% or more, 38% or more, or 30% or more.

In addition, the conjugated diene-based polymer may have a height retention ratio ($\Delta H_{@40°C}$) calculated by Equation 2 of 40% or less, and specifically, 38% or less, or 35% or less.

[Equation 2]

$$\Delta H_{@40°C}\ (\%) = (H_{8@40°C}/H_{0@40°C}) \times 100$$

In Equation 2,

$H_{0@40°C}$ is an initial height measured by preparing a sample by molding 2.5 g of a conjugated diene-based polymer at 100°C into a cylindrical shape with a diameter of 15 mm and a height of 12 mm, and cooling the sample to a temperature of 40°C, and

$H_{8@40°C}$ is a height of the sample measured after 8 minutes of applying a load of 5 kg to the upper surface of the sample while maintaining the temperature of 40°C.

In general, in conjugated diene-based polymers, branch chains are formed by introducing branch chains into a polymer chain by introducing a branch-containing monomer and/or a modifier, or by bonding polymer chains with a modifier as a linker, thereby forming a structure similar to a branch chain. In this case, although cold flow characteristics may be improved due to the branch chain structure, the processability may be improved, but the molecular weight distribution of the polymer may be significantly widened, so that excellent compounding properties such as tensile properties and viscoelastic properties of the conjugated diene-based polymer having a linear structure may not be maintained and may deteriorate.

However, the conjugated diene-based polymer according to an embodiment of the present invention includes a branch chain, but the branch chain is a branch chain (branch) formed only by controlling the polymerization of the monomer without introducing a branch-containing monomer, a modifier, or the like, and thereby may have an appropriate branch chain structure without excessive expansion of the molecular weight distribution.

The conjugated diene-based polymer according to an embodiment of the present invention may be predicted to have a molecular structure including the branched chain in terms of the simultaneously satisfaction of the above-described molecular weight distribution and the height retention ratios calculated by Equation 1 and/or Equation 2. Here, the height retention ratios calculated by Equation 1 and Equation 2 may represent the low-temperature fluidity of the polymer.

Accordingly, in an embodiment of the present invention, the copolymer polymer simultaneously satisfies the above-described molecular weight distribution and the height retention ratio ($\Delta H_{@20°C}$) calculated by Equation 1, or the above-described molecular weight distribution, the height retention ratio ($\Delta H_{@20°C}$) calculated by Equation 1, and the height retention ratio ($\Delta H_{@40°C}$) calculated by Equation 2, and may have excellent physical properties in terms of the tensile properties, viscoelastic properties, and abrasion resistance of the conjugated diene-based polymer with high linearity, while also having excellent processability properties.

In another embodiment, the conjugated diene-based polymer according to an embodiment of the present invention may have a beta value measured at 100°C of 0.2 or less, specifically 0.19 or less, 0.18 or less, or 0.05 or more, 0.1

or more, or 0.15 or more. From the beta value, it may be confirmed that a branch chain is introduced into the conjugated diene-based polymer.

In another embodiment, if the conjugated diene-based polymer according to an embodiment of the present invention is subjected to a dynamic viscoelasticity analysis according to a change in frequency, the difference (Max-Min) between the maximum value and the minimum value of a phase angle confirmed in an angular frequency range of 0.01 rad/s to 100 rad/s may be 2.3° or more, 2.35° or more, or 2.40° or more, and 3.5° or less, 3.30° or less, or 3.10° or less.

In addition, according to an embodiment of the present invention, if the conjugated diene-based polymer is subjected to a dynamic viscoelasticity analysis according to a change in frequency, the maximum value (Max) of the phase angle confirmed in the angular frequency range of 0.01 rad/s to 100 rad/s may be 44° or less. Specifically, the maximum value (Max) of the phase angle may be 44° or less, or 43.5° or less, and 38° or more, 38.5° or more, or 39° or more.

In addition, if the conjugated diene-based polymer is subjected to a dynamic viscoelasticity analysis according to a change in frequency, the difference (PA@1 rad/s - PA@0.1 rad/s) between the phase angle at an angular frequency of 1 rad/s and the phase angle at 0.1 rad/s may be +1.7° or more. Here, PA@1 rad/s and PA@0.1 rad/s mean PA at 1 rad/s and PA at 0.1 rad/s, respectively. Specifically, the difference in the phase angle (PA@1 rad/s - PA@0.1 rad/s) may be +1.71° or more, or +1.73° or more, and +3.50° or less, +3.00° or less, or +2.90° or less.

According to an embodiment of the present invention, if dynamic viscoelasticity analysis according to a change in frequency is performed on the conjugated diene-based polymer, the complex viscosity at an angular frequency of 0.01 rad/s may be 180,000 Pa.s or more. Specifically, the complex viscosity may be 180,000 Pa.s to 500,000 Pa.s, or 180,000 Pa.s to 300,000 Pa.s.

Depending on the branch chain and the length of the branch chain in the conjugated diene-based polymer, the difference between the maximum and minimum values of the phase angle (Max-Min), the difference in the phase angle (PA@1 rad/s - PA@0.1 rad/s), and the complex viscosity vary. As the branch chain and the length of the branch chain increase, the difference between the maximum and minimum values of the phase angle (Max-Min) and the difference in the phase angle (PA@1 rad/s - PA@0.1 rad/s) increase, and the complex viscosity at a low angular frequency (0.01 rad/s) tends to increase and the complex viscosity at a high angular frequency (1.0 rad/s) tends to decrease. In an embodiment of the present invention, the copolymer polymer may improve cold flow and processability by satisfying the difference between the maximum and minimum values of the phase angle (Max-Min), the difference between the phase angle (PA@1 rad/s - PA@0.1 rad/s), and the complex viscosity, and the conjugated diene-based polymer according to an embodiment of the present invention satisfying the difference between the maximum and minimum values of the phase angle (Max-Min), the difference between the phase angle (PA@1 rad/s - PA@0.1 rad/s), and the complex viscosity may mean that the conjugated diene-based polymer includes a branch chain with an appropriate length in the polymer at an appropriate ratio.

According to an embodiment of the present invention, the conjugated diene-based polymer may have a Mooney viscosity (ML1+4, @100°C) of 40 to 50. Here, @100°C means at 100°C.

## Method for Preparing Conjugated Diene-based Polymer

The present invention provides a method for preparing a conjugated diene-based polymer. The preparation method of the conjugated diene-based polymer may be a method for preparing the conjugated diene-based polymer described above.

According to an embodiment of the present invention, the preparation method of the conjugated diene-based polymer may include a step (S100) of polymerizing a conjugated diene-based monomer in a hydrocarbon solvent in the presence of a catalyst composition to prepare an active polymer.

According to an embodiment of the present invention, the catalyst composition may include a lanthanide rare earth element compound, an alkylating agent, a halide, and an organic solvent. In addition, the catalyst composition may include a reaction product of the lanthanide rare earth element compound, the alkylating agent, and the halide.

According to an embodiment of the present invention, the lanthanide rare earth element compound may be a neodymium compound, and specific examples thereof include: carboxylic acid salts of neodymium (e.g., neodymium acetate, neodymium acrylate, neodymium methacrylate, neodymium gluconate, neodymium citrate, neodymium fumarate, neodymium lactate, neodymium maleate, neodymium oxalate, neodymium 2-ethyl hexanoate, neodymium neodecanoate, etc.); organophosphates (e.g., neodymium dibutyl phosphate, neodymium dipentyl phosphate, neodymium dihexyl phosphate, neodymium diheptyl phosphate, neodymium dioctyl phosphate, neodymium bis(1-methylheptyl) phosphate, neodymium bis(2-ethylhexyl) phosphate, neodymium didecyl phosphate, etc.); organophosphonates (e.g., neodymium butyl phosphonate, neodymium pentyl phosphonate, neodymium hexyl phosphonate, neodymium heptyl phosphonate, neodymium octyl phosphonate, neodymium (1-methylheptyl) phosphonate, neodymium (2-ethylhexyl) phosphonate, neodymium disyl phosphonate, neodymium dodecyl phosphonate, neodymium octadecyl phosphonate, etc.); organic phosphinates (e.g., neodymium butylphosphinate, neodymium pentylphosphinate, neodymium hexyl phosphinate, neodymium heptyl phosphinate, neodymium octyl phosphinate, neodymium (1-methyl heptyl) phosphinate, neodymium (2-ethylhexyl) phosphinate), etc.; carbamates (e.g., neodymium dimethyl carbamate, neodymium diethyl

carbamate, neodymium diisopropyl carbamate, neodymium dibutyl carbamate, neodymium dibenzyl carbamate, etc.); dithio carbamates (e.g., neodymium dimethyldithiocarbamate, neodymium diethyldithiocarbamate, neodymium diisopropyl dithiocarbamate, neodymium dibutyldithiocarbamate, etc.); xanthogenates (e.g., neodymium methyl xanthogenate, neodymium ethyl xanthogenate, neodymium isopropyl xanthogenate, neodymium butyl xanthogenate, neodymium benzyl xanthogenate, etc.); β-diketonates (e.g., neodymium acetylacetonate, neodymium trifluoroacetyl acetonate, neodymium hexafluoroacetyl acetonate, neodymium benzoyl acetonate, etc.); alkoxides or allyloxides (e.g., neodymium methoxide, neodymium ethoxide, neodymium isopropoxide, neodymium phenoxide, neodymium nonyl phenoxide, etc.); halides or pseudohalides (neodymium fluoride, neodymium chloride, neodymium bromide, neodymium iodide, neodymium cyanide, neodymium cyanate, neodymium thiocyanate, neodymium azide, etc.); oxyhalides (e.g., neodymium oxyfluoride, neodymium oxychloride, neodymium oxybromide, etc.); or organic neodymium compounds including one or more rare earth element-carbon bonds (e.g., $Cp_3Ln$, $Cp_2LnR$, $Cp_2LnCl$, $CpLnCl_2$, CpLn(cyclooctatetraene), $(C_5Me_5)_2LnR$, $LnR_3$, $Ln(allyl)_3$, $Ln(allyl)_2Cl$, etc., where Ln is a rare earth metal element and R is a hydrocarbyl group), and may include any one among them, or a mixture of two or more thereof.

According to an embodiment of the present invention, the lanthanide rare earth element compound may be a neodymium compound represented by Formula 1 below.

[Formula 1]

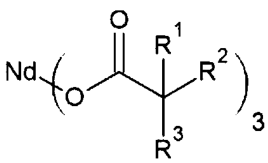

In Formula 1, $R^1$ to $R^3$ are each independently hydrogen or an alkyl group having 1 to 12 carbon atoms, but $R^1$ to $R^3$ may not all be hydrogen. In a specific embodiment, in Formula 1, $R^1$ may be an alkyl group having 4 to 12 carbon atoms, $R^2$ and $R^3$ may be each independently hydrogen or an alkyl group having 2 to 8 carbon atoms, but $R^2$ and $R^3$ may not both be hydrogen. In a more specific embodiment, in Formula 1, $R^1$ may be an alkyl group having 6 to 8 carbon atoms, and $R^2$ and $R^3$ may be each independently hydrogen or an alkyl group having 2 to 6 carbon atoms, but $R^2$ and $R^3$ may not both be hydrogen.

According to an embodiment of the present invention, the lanthanide rare earth element compound may be one or more selected from the group consisting of Nd(2-ethyl hexanoate)$_3$ (or neodymium versatate), Nd(2,2-dimethyl decanoate)$_3$, Nd(2,2-diethyl decanoate)$_3$, Nd(2,2-dipropyl decanoate)$_3$, Nd(2,2-dibutyl decanoate)$_3$, Nd(2,2-dihexyl decanoate)$_3$, Nd(2,2-dioctyl decanoate)$_3$, Nd(2-ethyl-2-propyl decanoate)$_3$, Nd(2-ethyl-2-butyl decanoate)$_3$, Nd(2-ethyl-2-hexyl decanoate)$_3$, Nd(2-propyl-2-butyl decanoate)$_3$, Nd(2-propyl-2-hexyl decanoate)$_3$, Nd(2-propyl-2-isopropyl decanoate)$_3$, Nd(2-butyl-2-hexyl decanoate)$_3$, Nd(2-hexyl-2-octyl decanoate)$_3$, Nd(2,2-diethyl octanoate)$_3$, Nd(2,2-dipropyl octanoate)$_3$, Nd(2,2-dibutyl octanoate)$_3$, Nd(2,2-dihexyl octanoate)$_3$, Nd(2-ethyl-2-propyl octanoate)$_3$, Nd(2-ethyl-2-hexyl octanoate)$_3$, Nd(2,2-diethyl nonanoate)$_3$, Nd(2,2-dipropyl nonanoate)$_3$, Nd(2,2-dibutyl nonanoate)$_3$, Nd(2,2-dihexyl nonanoate)$_3$, Nd(2-ethyl-2-propyl nonanoate)$_3$, and Nd(2-ethyl-2-hexyl nonanoate)$_3$.

According to an embodiment of the present invention, the neodymium compound may include a carboxylate ligand having an alkyl group of various lengths having 2 or more carbon atoms at an α-position, thereby inducing a steric change around a neodymium central metal to block the entanglement phenomenon among compounds, and thus, when polymerizing a conjugated diene-based polymer using the catalyst composition, there is an effect of suppressing oligomerization. In addition, such a neodymium compound has high solubility in a solvent, and the ratio of neodymium located in the central portion, which is difficult to convert into a catalytically active species, is reduced, so that the conversion ratio into a catalytically active species is high.

According to an embodiment of the present invention, the solubility of the neodymium compound may be about 60 parts by weight or more relative to 100 parts by weight of a nonpolar solvent at room temperature (25°C). The solubility of the neodymium compound means the degree to which neodymium compound dissolves clearly without turbidity, and by exhibiting such high solubility, excellent catalytic activity may be shown.

According to an embodiment of the present invention, the alkylating agent is an organometallic compound capable of transferring a hydrocarbyl group to another metal and may serve as a cocatalyst. The alkylating agent may be an organometallic compound that is soluble in a polymerization solvent and contains a metal-carbon bond, such as an organoaluminum compound, an organomagnesium compound, or an organolithium compound.

According to an embodiment of the present invention, the alkylating agent may be an organoaluminum compound, and specific examples thereof include: alkyl aluminums such as tri-n-propyl aluminum, triisopropyl aluminum, tri-n-butyl aluminum, triisobutyl aluminum, tri-t-butyl aluminum, tripentyl aluminum, trihexyl aluminum, tricyclohexyl

aluminum, and trioctyl aluminum; dihydrocarbyl aluminum hydrides such as diethyl aluminum hydride, di-n-propyl aluminum hydride, diisopropyl aluminum hydride, di-n-butyl aluminum hydride, diisobutyl aluminum hydride (DIBAH), di-n-octyl aluminum hydride, diphenyl aluminum hydride, di-p-tolyl aluminum hydride, dibenzyl aluminum hydride, phenylethyl aluminum hydride, phenyl-n-propyl aluminum hydride, phenylisopropyl aluminum hydride, phenyl-n-butyl aluminum hydride, phenylisobutyl aluminum hydride, phenyl-n-octyl aluminum hydride, p-tolylethyl aluminum hydride, p-tolyl-n-propyl aluminum hydride, p-tolylisopropyl aluminum hydride, p-tolyl-n-butyl aluminum hydride, p-tolylisobutyl aluminum hydride, p-tolyl-n-octyl aluminum hydride, benzylethyl aluminum hydride, benzyl-n-propyl aluminum hydride, benzylisopropyl aluminum hydride, benzyl-n-butyl aluminum hydride, benzylisobutyl aluminum hydride and benzyl-n-octyl aluminum hydride; and hydrocarbyl aluminum dihydrides such as ethyl aluminum dihydride, n-propyl aluminum dihydride, isopropyl aluminum dihydride, n-butyl aluminum dihydride, isobutyl aluminum dihydride and n-octyl aluminum dihydride.

According to an embodiment of the present invention, the alkylating agent may be an alkyl aluminum compound represented by Formula 2 below.

[Formula 2] $AlR^4R^5R^6$

In Formula 2, $R^4$ to $R^6$ are each independently hydrogen or an alkyl group having 1 to 12 carbon atoms, but $R^4$ to $R^6$ are not all hydrogen, and tri-n-hexyl aluminum and tri-n-octyl aluminum may not be included. In a specific embodiment, in Formula 2, $R^4$ to $R^6$ may be each independently hydrogen or an alkyl group having 3 to 8 carbon atoms, but $R^4$ to $R^6$ may not be all hydrogen, and tri-n-hexyl aluminum and tri-n-octyl aluminum may not be included. In a more specific embodiment, in Formula 2, $R^4$ to $R^6$ may be each independently hydrogen or an alkyl group having 3 to 5 carbon atoms, but $R^4$ to $R^6$ may not be all hydrogen.

According to an embodiment of the present invention, the alkylating agent may include two or more alkyl aluminum compounds. In a specific embodiment, the alkylating agent may include two or more selected from the group consisting of dialkyl aluminum hydride and trialkyl aluminum. In a more specific embodiment, the alkylating agent may include one or more dialkyl aluminum hydrides and one or more trialkyl aluminums, and in a more specific embodiment, the alkylating agent may include diisobutyl aluminum hydride and triisobutyl aluminum, or diisobutyl aluminum hydride and triethyl aluminum.

According to an embodiment of the present invention, the catalyst composition may be obtained by introducing an alkylating agent in a molar ratio of 1 mol or more, 2 mol or more, 3 mol or more, 4 mol or more, 5 mol or more, 6 mol or more, 7 mol or more, 8 mol or more, 9 mol or more, 10 mol or more, 11 mol or more, 12 mol or more, 13 mol or more, 14 mol or more, or 15 mol or more, relative to 1 mol of the lanthanide rare earth element compound, and may also include the alkylating agent in a molar ratio of 200 mol or less, 150 mol or less, 80 mol or less, 60 mol or less, 50 mol or less, 40 mol or less, 30 mol or less, or 25 mol or less.

According to an embodiment of the present invention, the halide may be a halogen single substance, an interhalogen compound, a hydrogen halide, an organic halide, a non-metal halide, a metal halide, or an organometallic halide.

According to an embodiment of the present invention, the halogen single substance may be fluorine, chlorine, bromine or iodine.

According to an embodiment of the present invention, the interhalogen compound may be iodine monochloride, iodine monobromide, iodine trichloride, iodine pentafluoride, iodine monofluoride or iodine trifluoride.

According to an embodiment of the present invention, the hydrogen halide may be hydrogen fluoride, hydrogen chloride, hydrogen bromide or hydrogen iodide.

According to an embodiment of the present invention, the organic halide may be t-butyl chloride (t-BuCl), t-butyl bromide, allyl chloride, allyl bromide, benzyl chloride, benzyl bromide, chloro-di-phenylmethane, bromo-di-phenylmethane, triphenylmethyl chloride, triphenylmethyl bromide, benzylidene chloride, benzylidene bromide, methyltrichlorosilane, phenyltrichlorosilane, dimethyldichlorosilane, diphenyldichlorosilane, trimethylchlorosilane (TMSCl), benzoyl chloride, benzoyl bromide, propionyl chloride, propionyl bromide, methyl chloroformate, methyl bromoformate, iodomethane, diiodomethane, triiodomethane (also referred to as "iodoform"), tetraiodomethane, 1-iodopropane, 2-iodopropane, 1,3-diiodopropane, t-butyl iodide, 2,2-dimethyl-1-iodopropane (also referred to as "neopentyl iodide"), allyl iodide, iodobenzene, benzyl iodide, diphenylmethyl iodide, triphenylmethyl iodide, benzylidene iodide (also referred to as "benzal iodide"), trimethylsilyl iodide, triethylsilyl iodide, triphenylsilyl iodide, dimethyldiiodosilane, diethyldiiodosilane, diphenyldiiodosilane, methyltriiodosilane, ethyltriiodosilane, phenyltriiodosilane, benzoyl iodide, propionyl iodide or methyl iodoformate.

According to an embodiment of the present invention, the non-metal halide may be phosphorus trichloride, phosphorus tribromide, phosphorus pentachloride, phosphorus oxychloride, phosphorus oxybromide, boron trifluoride, boron trichloride, boron tribromide, silicon tetrafluoride, silicon tetrachloride ($SiCl_4$), silicon tetrabromide, arsenic trichloride, arsenic tribromide, selenium tetrachloride, selenium tetrabromide, tellurium tetrachloride, tellurium tetrabromide,

silicon tetraiodide, arsenic triiodide, tellurium tetraiodide, boron triiodide, phosphorus triiodide, phosphorus oxyiodide, or selenium tetraiodide.

According to an embodiment of the present invention, the metal halide may be tin tetrachloride, tin tetrabromide, aluminum trichloride, aluminum tribromide, antimony trichloride, antimony pentachloride, antimony tribromide, aluminum trifluoride, gallium trichloride, gallium tribromide, gallium trifluoride, indium trichloride, indium tribromide, indium trifluoride, titanium tetrachloride, titanium tetrabromide, zinc dichloride, zinc difluoride, aluminum triiodide, gallium triiodide, indium triiodide, titanium tetrachloride, zinc diiodide, germanium tetraiodide, tin tetraiodide, tin diiodide, antimony triiodide, or magnesium diiodide.

According to an embodiment of the present invention, the organometallic halide may be an alkyl aluminum halide or an alkyl aluminum sesquihalide. In a specific embodiment, the organometallic halide may be dimethyl aluminum chloride, diethyl aluminum chloride, dimethyl aluminum bromide, diethyl aluminum bromide, dimethyl aluminum fluoride, diethyl aluminum fluoride, methyl aluminum dichloride, ethyl aluminum dichloride, methyl aluminum dibromide, ethyl aluminum dibromide, methyl aluminum difluoride, ethyl aluminum difluoride, methyl aluminum sesquichloride, ethyl aluminum sesquichloride (EASC), isobutyl aluminum sesquichloride, methyl magnesium chloride, methyl magnesium bromide, ethyl magnesium chloride, ethyl magnesium bromide, n-butyl magnesium chloride, n-butyl magnesium bromide, phenyl magnesium chloride, phenyl magnesium bromide, benzyl magnesium chloride, trimethyl tin chloride, trimethyl tin bromide, triethyl tin chloride, triethyl tin bromide, di-t-butyl tin dichloride, di-t-butyltin dibromide, di-n-butyltin dichloride, di-n-butyltin dibromide, tri-n-butyltin chloride, tri-n-butyltin bromide, methyl magnesium iodide, dimethyl aluminum iodide, diethyl aluminum iodide, di-n-butyl aluminum iodide, diisobutyl aluminum iodide, di-n-octyl aluminum iodide, methyl aluminum diiodide, ethyl aluminum diiodide, n-butyl aluminum diiodide, isobutyl aluminum diiodide, methyl aluminum sesquiiodide, ethyl aluminum sesquiiodide, isobutyl aluminum sesquiiodide, ethyl magnesium iodide, n-butyl magnesium iodide, isobutyl magnesium iodide, phenyl magnesium iodide, benzyl magnesium iodide, trimethyl tin iodide, triethyl tin iodide, tri-n-butyl tin iodide, di-n-butyl tin diiodide or di-t-butyl tin diiodide.

According to an embodiment of the present invention, the halide may be one or more selected from the group consisting of an alkyl aluminum halide represented by Formula 3 below and an alkyl aluminum sesquihalide represented by Formula 4 below from the viewpoint of improving catalytic activity and thus reactivity.

[Formula 3] $AlR^7R^8R^9$

In Formula 3, $R^7$ to $R^9$ are each independently a halogen group or an alkyl group having 1 to 12 carbon atoms, but $R^7$ to $R^9$ may not all be halogen groups. In a specific embodiment, in Formula 3, $R^7$ to $R^9$ may be each independently a halogen group or an alkyl group having 1 to 6 carbon atoms, but $R^7$ to $R^9$ may not all be halogen groups. In a more specific embodiment, in Formula 3, $R^7$ and $R^8$ may be each independently an alkyl group having 1 to 4 carbon atoms, and $R^9$ may be a halogen group.

[Formula 4]

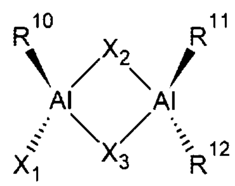

In Formula 4, $R^{10}$ to $R^{12}$ may each independently be an alkyl group having 1 to 12 carbon atoms, and $X_1$ to $X_3$ may be each independently a halogen group. In a specific embodiment, in Formula 4, $R^{10}$ to $R^{12}$ may be each independently an alkyl group having 1 to 6 carbon atoms. In a more specific embodiment, in Formula 4, $R^{10}$ to $R^{12}$ may be each independently an alkyl group having 1 to 4 carbon atoms.

According to an embodiment of the present invention, the halide may be one or more selected from the group consisting of a dialkyl aluminum halide and an alkyl aluminum sesquihalide, and the types of the dialkyl aluminum halide and the alkyl aluminum sesquihalide are as described above. In a specific embodiment, the dialkyl aluminum halide may be diethyl aluminum chloride, and the alkyl aluminum sesquihalide may be ethyl aluminum sesquichloride.

According to an embodiment of the present invention, the catalyst composition may contain the halide in a molar ratio of 0.1 mol or more, 0.5 mol or more, 1.0 mol or more, 1.5 mol or more, 2.0 mol or more, 2.5 mol or more, or 3.0 mol or more relative to 1 mol of the lanthanide rare earth element compound. In addition, the halide may be contained in a molar ratio of 20 mol or less, 15 mol or less, 10 mol or less, 8 mol or less, 6 mol or less, or 5 mol or less relative to 1 mol of the lanthanide rare earth element compound.

According to an embodiment of the present invention, the catalyst composition may contain an organic solvent.

The organic solvent may be a nonpolar solvent that is not reactive with the constituent components of the catalyst composition. In a specific embodiment, the organic solvent may be a linear, branched or cyclic aliphatic hydrocarbon having 5 to 20 carbon atoms, such as n-pentane, n-hexane, n-heptane, n-octane, n-nonane, n-decane, isopentane, isohexane, isopentane, isooctane, 2,2-dimethylbutane, cyclopentane, cyclohexane, methylcyclopentane and methylcyclohexane; a mixed solvent of aliphatic hydrocarbons having 5 to 20 carbon atoms, such as petroleum ether, petroleum spirits and kerosene; or an aromatic hydrocarbon solvent, such as benzene, toluene, ethylbenzene and xylene. In a more specific embodiment, the organic solvent may be a linear, branched or cyclic aliphatic hydrocarbon having 5 to 20 carbon atoms or a mixed solvent of aliphatic hydrocarbons, preferably n-hexane, cyclohexane or a mixture thereof.

Meanwhile, according to an embodiment of the present invention, the catalyst composition may be prepared by stirring a lanthanide rare earth element compound and a first alkylating agent in an organic solvent to perform pre-activation, adding a second alkylating agent thereto and stirring to perform alkylation, and then adding a halide to perform halogenation. Here, the first alkylating agent may be one or more selected from the aforementioned trialkyl aluminums, and the second alkylating agent may be any one or more selected from the aforementioned dialkyl aluminum hydrides. The pre-activation may be performed by stirring at a temperature of 0°C to 40°C, the alkylation may be performed by stirring at a temperature of -10°C to 30°C, and the halogenation may be performed by stirring at a temperature of -20°C to 20°C.

In case where the catalyst composition is prepared under the conditions, the catalytic activity may be maximized, and in case where the conjugated diene-based monomer is polymerized, the polymerization of the monomer may be rapidly performed, thereby increasing the reaction between polymer chains, which may be advantageous in finally preparing a conjugated diene-based polymer with appropriately introduced branched chains.

According to an embodiment of the present invention, the conjugated diene-based monomer that may be introduced in step (S100) may be one or more selected from the group consisting of 1,3-butadiene, isoprene, 1,3-pentadiene, 1,3-hexadiene, 2,3-dimethyl-1,3-butadiene, 2-ethyl-1,3-butadiene, 2-methyl-1,3-pentadiene, 3-methyl-1,3-pentadiene, 4-methyl-1,3-pentadiene, and 2,4-hexadiene.

According to an embodiment of the present invention, the hydrocarbon solvent in step (S100) may be one or more selected from the group consisting of n-pentane, n-hexane, n-heptane, isooctane, cyclohexane, toluene, benzene, and xylene.

According to an embodiment of the present invention, the catalyst composition may be used in an amount such that the neodymium compound is 0.03 mmol or more, 0.04 mmol or more, 0.05 mmol or more, or 0.06 mmol or more, with respect to a total 100 g of the conjugated diene-based monomer, and may also be used in an amount such that the neodymium compound is 0.15 mmol or less, 0.14 mmol or less, 0.13 mmol or less, 0.12 mmol or less, 0.11 mmol or less, 0.10 mmol or less, 0.09 mmol or less, or 0.08 mmol or less.

According to an embodiment of the present invention, the polymerization in step (S100) may be performed as a continuous polymerization in a polymerization reactor including at least two reactors, or may be performed in a batch reactor. In addition, the polymerization may be a temperature-raising polymerization, an isothermal polymerization, or a constant temperature polymerization (adiabatic polymerization).

According to an embodiment of the present invention, the constant temperature polymerization means polymerizing by the heat of reaction itself without arbitrarily applying heat after the introduction of the catalyst composition, the temperature-raising polymerization means increasing the temperature by arbitrarily applying heat after the introduction of the catalyst composition, and the isothermal polymerization means maintaining the temperature of the reactants constant by increasing heat by applying heat or removing heat after the introduction of the catalyst composition.

According to an embodiment of the present invention, the polymerization in step (S100) may be performed using a coordination anion polymerization, and polymerization environment may be bulk polymerization, solution polymerization, suspension polymerization, or emulsion polymerization, and a specific embodiment may be solution polymerization.

According to an embodiment of the present invention, the polymerization in step (S100) may be carried out at a temperature of -20°C or higher, -10°C or higher, 0°C or higher, 10°C or higher, 20°C or higher, 30°C or higher, 40°C or higher, 50°C or higher, or 60°C or higher, and may be carried out at a temperature of 200°C or lower, 150°C or lower, 120°C or lower, or 90°C or lower, and within the range, the polymerization reaction may be smoothly controlled while securing the cis-1,4 bond content of the produced conjugated diene-based polymer.

According to an embodiment of the present invention, the polymerization in step (S100) may be carried out for 15 minutes or longer, 20 minutes or longer, 30 minutes or longer, 40 minutes or longer, 50 minutes or longer, or 1 hour or longer, and may be carried out for 3 hours or shorter, 2 hours 30 minutes or shorter, or 2 hours or shorter.

As another embodiment, according to an embodiment of the present invention, the polymerization in step (S100) may be performed as a continuous polymerization using a continuous reactor in which two or more, or two to ten, or two to five, or two to four reactors are connected in series, and in this case, it may be more advantageous for the production of a conjugated diene-based polymer having the above-described characteristics with branched chains introduced.

In addition, according to an embodiment of the present invention, the polymerization in step (S100) may be performed for 60 minutes or more, 70 minutes or more, 80 minutes or more, 90 minutes or more, or 180 minutes or less, 150 minutes or less, or 120 minutes or less, and in this case, it may be more advantageous for the production of a conjugated

diene-based polymer having the above-described characteristics with branched chains introduced.

In addition, according to an embodiment of the present invention, the polymerization in step (S100) may be performed by dividing the conjugated diene-based monomer into two or more portions, and in the case of dividing the conjugated diene-based monomer into two or more portions, the amount of the conjugated diene-based monomer added after the second portion may be 20 parts by weight to 40 parts by weight, or 25 parts by weight to 35 parts by weight, with respect to 100 parts by weight of the total conjugated diene-based monomer added during the polymerization. In addition, in the case of dividing the conjugated diene-based monomer into three or more portions, the respective amounts of the conjugated diene-based monomer added in the second, third, and nth portions may be added by appropriately distributing the amount of the conjugated diene-based monomer added after the second portion.

In addition, if the conjugated diene-based monomer is dividedly introduced, the conjugated diene-based monomer introduced after an initial stage may be introduced at a time at a point where the polymerization conversion of the initially introduced conjugated diene-based monomer is 50% or more, 60% or more, or 70% or more, and 90% or less, 85% or less, or 80% or less.

According to an embodiment of the present invention, the conjugated diene-based polymer formed by the polymerization in step (S100) may be an active polymer including a site activated by the catalyst composition.

According to an embodiment of the present invention, a step (S200) of reacting the active polymer with a modifier may be included. The modifier may be a known modifier that may be used when producing a conjugated diene-based polymer using a catalyst composition containing a lanthanide rare earth element compound.

According to an embodiment of the present invention, the production method of the conjugated diene-based polymer may include a step of further using an additive such as a reaction terminator for completing a polymerization reaction, such as polyoxyethylene glycol phosphate; or an antioxidant, such as 2,6-di-t-butylparacresol, after producing the active polymer, to terminate the polymerization. In addition, an additive that facilitates solution polymerization, such as a chelating agent, a dispersant, a pH regulator, a deoxidizer, or an oxygen scavenger, may be optionally further used together with the reaction terminator.

The production method of the conjugated diene-based polymer according to an embodiment of the present invention may be performed by appropriately selecting and combining conditions within the above-described method so that a conjugated diene-based polymer satisfying the above-described parameters may be produced, and specifically, the method may be performed by appropriately selecting and controlling the catalyst composition production conditions, such as the pre-activation step, polymerization time, monomer dividing, reactor temperature, and catalyst adding amount, so that a conjugated diene-based polymer satisfying the above-described parameters may be produced.

## Rubber Composition

The present invention provides a rubber composition.

According to an embodiment of the present invention, the rubber composition may include the conjugated diene-based polymer. In a specific embodiment, the rubber composition may include the conjugated diene-based polymer in an amount of 0.1 wt% or more, 10 wt% or more, or 20 wt% or more, and may also include the conjugated diene-based polymer in an amount of 100 wt% or less, 95 wt% or less, or 90 wt% or less, and within this range, the abrasion resistance and crack resistance of a molded product, for example, a tire, manufactured using the rubber composition may be sufficiently secured.

According to an embodiment of the present invention, the rubber composition may further include other rubber components as needed in addition to the conjugated diene-based polymer. In this case, the rubber component may be included in an amount of 90 wt% or less with respect to the total weight of the rubber composition. Specifically, the rubber component may be included in an amount of 1 to 900 wt% with respect to 100 wt% of the conjugated diene-based copolymer.

According to an embodiment of the present invention, the rubber component may be natural rubber or synthetic rubber, and for example, the rubber component may be natural rubber (NR) including cis-1,4-polyisoprene; modified natural rubber such as epoxidized natural rubber (ENR), deproteinized natural rubber (DPNR), and hydrogenated natural rubber, which are modified or purified from the general natural rubber; or a synthetic rubber such as styrene-butadiene copolymer (SBR), polybutadiene (BR), polyisoprene (IR), butyl rubber (IIR), ethylene-propylene copolymer, polyisobutylene-co-isoprene, neoprene, poly(ethylene-co-propylene), poly(styrene-co-butadiene), poly(styrene-co-isoprene), poly(styrene-co-isoprene-co-butadiene), poly(isoprene-co-butadiene), poly(ethylene-co-propylene-co-diene), polysulfide rubber, acrylic rubber, urethane rubber, silicone rubber, epichlorohydrin rubber, halogenated butyl rubber, and any one among them or a mixture of two or more thereof may be used.

According to an embodiment of the present invention, the rubber composition may have a difference of 30 or less between the Mooney viscosity (ML1+4 @100°C) of the conjugated diene-based polymer and the Mooney viscosity (ML1+4 @100°C) of the rubber composition. In a specific embodiment, the rubber composition may have a difference of 30 or less, 29 or less, 28 or less, 27 or less, 26 or less, 25 or less, 24 or less, 23 or less, 22 or less, 21 or less, or 20 or less

between the Mooney viscosity (ML1+4 @100°C) of the conjugated diene-based polymer and the Mooney viscosity (ML1+4 @100°C) of the rubber composition. In addition, the lower limit is not particularly limited, but may be 1 or more, 2 or more, 3 or more, 4 or more, 5 or more, 6 or more, 7 or more, 8 or more, 9 or more, 10 or more, 11 or more, 12 or more, 13 or more, 14 or more, or 15 or more. In this way, if the difference between the Mooney viscosity (ML1+4 @100°C) of the conjugated diene-based polymer and the Mooney viscosity (ML1+4 @100°C) of the rubber composition is adjusted within the above range, the processability may be particularly improved.

According to an embodiment of the present invention, the rubber composition may have a Mooney viscosity (ML1+4 @100°C) of 50 or more, and 100 or less. In a specific embodiment, the rubber composition may have a Mooney viscosity (ML1+4 @100°C) of 50 or more, 51 or more, 52 or more, 53 or more, 54 or more, 55 or more, 56 or more, 57 or more, 58 or more, 59 or more, 60 or more, or 61 or more, and 100 or less, 99 or less, 98 or less, 97 or less, 96 or less, 95 or less, 94 or less, 93 or less, 92 or less, 91 or less, 90 or less, 89 or less, 88 or less, 87 or less, 86 or less, 85 or less, or 84 or less. The Mooney viscosity of the rubber composition may vary depending on other components further included in the rubber composition other than the conjugated diene-based polymer, but if controlled within the range, processability may be particularly improved.

According to an embodiment of the present invention, the rubber composition may include a filler of 20 parts by weight or more and 90 parts by weight or less, with respect to 100 parts by weight of the conjugated diene-based polymer. The filler may be a silica-based filler, a carbon black-based filler, or a combination thereof. In a specific embodiment, the filler may be a carbon black-based filler.

According to an embodiment of the present invention, the carbon black-based filler may have a nitrogen adsorption specific surface area (N2SA, measured in accordance with JIS K 6217-2:2001) of 20 $m^2/g$ to 250 $m^2/g$, and within this range, the rubber composition may have excellent processability while sufficiently securing reinforcing performance by the filler. In addition, the carbon black-based filler may have a dibutyl phthalate absorption (DBP) of 80 cc/100 g to 200 cc/100 g, and within this range, the rubber composition may have excellent processability while sufficiently securing reinforcing performance by the filler.

According to an embodiment of the present invention, the silica-based filler may be wet silica (hydrated silicic acid), dry silica (anhydrous silicic acid), calcium silicate, aluminum silicate, or colloidal silica. In a specific embodiment, the silica-based filler may be wet silica, which has the most remarkable effect of improving fracture characteristics and achieving wet grip properties. In addition, the silica-based filler may have a nitrogen adsorption specific surface area per gram (N2SA) of 120 $m^2/g$ to 180 $m^2/g$ and a cetyl trimethyl ammonium bromide (CTAB) adsorption surface area of 100 $m^2/g$ to 200 $m^2/g$, and within the ranges, the processability of the rubber composition may be excellent while sufficiently securing reinforcing performance by the filler.

According to an embodiment of the present invention, if a silica-based filler is used as the filler, a silane coupling agent may be used together to improve reinforcing properties and low heat generation properties. The silane coupling agent may be bis(3-triethoxysilylpropyl)tetrasulfide, bis(3-triethoxysilylpropyl)trisulfide, bis(3-triethoxysilylpropyl)disulfide, bis(2-triethoxysilylethyl)tetrasulfide, bis(3-trimethoxysilylpropyl)tetrasulfide, bis(2-trimethoxysilylethyl)tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyltetrasulfide, 3-triethoxysilylpropyl-N,N-dimethylthiocarbamoyltetrasulfide, 2-triethoxysilylethyl-N,N-dimethylthiocarbamoyltetrasulfide, 3-trimethoxysilylpropylbenzothiazolyltetrasulfide, 3-triethoxysilylpropylbenzolyltetrasulfide, 3-triethoxysilylpropylmethacrylatemonosulfide, 3-trimethoxysilylpropylmethacrylatemonosulfide, bis(3-diethoxymethylsilylpropyl)tetrasulfide, 3-mercaptopropyldimethoxymethylsilane, dimethoxymethylsilylpropyl-N,N-dimethylthiocarbamoyltetrasulfide or dimethoxymethylsilylpropylbenzo thiazolyltetrasulfide. In a specific embodiment, the silane coupling agent may be bis(3-triethoxysilylpropyl)polysulfide or 3-trimethoxysilylpropylbenzothiazyltetrasulfide considering the reinforcing property improvement effect.

According to an embodiment of the present invention, the rubber composition may be sulfur crosslinkable, and thus may further include a vulcanizing agent. The vulcanizing agent may be specifically sulfur powder, and may be included in an amount of 0.1 parts by weight to 10 parts by weight with respect to 100 parts by weight of the rubber component, and within this range, the required elastic modulus and strength of the vulcanized rubber composition may be secured, and at the same time, low fuel consumption may be secured.

According to an embodiment of the present invention, in addition to the above components, the rubber composition may further include various additives commonly used in the rubber industry, specifically, a vulcanization accelerator, a process oil, a plasticizer, an anti-aging agent, a scorch inhibitor, zinc white, stearic acid, a thermosetting resin, or a thermoplastic resin.

According to an embodiment of the present invention, the vulcanization accelerator is not particularly limited, and specifically, thiazole compounds such as M (2-mercaptobenzothiazole), DM (dibenzothiazyl disulfide), CZ (N-cyclohexyl-2-benzothiazyl sulfenamide), or guanidine compounds such as DPG (diphenylguanidine) may be used. The vulcanization accelerator may be included in an amount of 0.1 to 5 parts by weight with respect to 100 parts by weight of the rubber component.

According to an embodiment of the present invention, the process oil acts as a softener in the rubber composition,

and specific examples thereof include paraffinic, naphthenic, or aromatic compounds, and more specifically, if considering tensile strength and abrasion resistance, aromatic process oils may be used, and if considering hysteresis loss and low-temperature characteristics, naphthenic or paraffinic process oils may be used. The process oil may be included in an amount of 100 parts by weight or less relative to 100 parts by weight of the rubber component, and within this range, the tensile strength and low heat generation (low fuel consumption) of the vulcanized rubber may be prevented from deteriorating.

According to an embodiment of the present invention, the anti-aging agent may be N-isopropyl-N'-phenyl-p-phenylenediamine, N-(1,3-dimethylbutyl)-N'-phenyl-p-phenylenediamine, 6-ethoxy-2,2,4-trimethyl-1,2-dihydroquinoline, or a high-temperature condensate of diphenylamine and acetone. The anti-aging agent may be used in an amount of 0.1 parts by weight to 6 parts by weight relative to 100 parts by weight of the rubber component.

According to an embodiment of the present invention, the rubber composition may be obtained by mixing using a mixer such as a Banbury mixer, a roll mixer, or an internal mixer according to the above compounding prescription, and a rubber composition having low heat generation and excellent abrasion resistance may be obtained by a vulcanization process after a molding processing.

According to an embodiment of the present invention, the rubber composition may be useful for manufacturing various parts of a tire, such as a tire tread, an undertread, a sidewall, a carcass coating rubber, a belt coating rubber, a bead filler, a chafer, or a bead coating rubber, or various industrial rubber products, such as an anti-vibration rubber, a belt conveyor, or a hose. In a specific embodiment, a molded product manufactured using the rubber composition may include a tire or a tire tread.

Hereinafter, embodiments of the present invention will be described in detail so that a person skilled in the art may easily practice the present invention. However, the present invention may be achieved in various different forms and is not limited to the embodiments described herein.

**Preparation Example 1**

In a hexane solvent, NdV (neodymium versatate, Nd(2-ethyl hexanoate)$_3$) and tri-n-octylaluminum (TNOA) were added and stirred at 0°C for 30 minutes for activation, diisobutylaluminum hydride (DIBAH) was added and stirred at 10°C for 30 minutes to perform alkylation, and then diethylaluminum chloride (DEAC) was added and stirred at -5°C for 30 minutes to prepare a catalyst composition (NdV:TNOA:DIBAH:DEAC = 1:10:15:3 molar ratio).

**Preparation Example 2**

In a hexane solvent, NdV (neodymium versatate, Nd(2-ethyl hexanoate)$_3$) and tri-n-octyl aluminum (TNOA) were added and stirred at 0°C for 30 minutes for activation, triisobutyl aluminum (TIBA) was added and stirred at 10°C for 30 minutes to perform alkylation, and then diethyl aluminum chloride (DEAC) was added and stirred at -5°C for 30 minutes to prepare a catalyst composition (NdV:TNOA:TIBA:DEAC = 1:20:30:3 molar ratio).

**Preparation Example 3**

In a hexane solvent, NdV (neodymium versatate, Nd(2-ethyl hexanoate)$_3$) and triethyl aluminum (TEAL) were added and stirred at 0°C for 30 minutes for activation, diisobutyl aluminum hydride (DIBAH) was added and stirred at 10°C for 30 minutes to perform alkylation, and then diethyl aluminum chloride (DEAC) was added and stirred at -5°C for 30 minutes to prepare a catalyst composition (NdV:TEAL:DIBAH:DEAC = 1:4:15:3 molar ratio).

**Preparation Example 4**

In a hexane solvent, NdV (neodymium versatate, Nd(2-ethyl hexanoate)$_3$) and triethyl aluminum (TEAL) were added and stirred at 0°C for 30 minutes for activation, diisobutyl aluminum hydride (DIBAH) was added and stirred at 10°C for 30 minutes to perform alkylation, and then diethyl aluminum chloride (DEAC) was added and stirred at -5°C for 30 minutes to prepare a catalyst composition (NdV:TEAL:DIBAH:DEAC = 1:2:15:3 molar ratio).

**Preparation Example 5**

In a hexane solvent, NdV (neodymium versatate, Nd(2-ethyl hexanoate)$_3$) and triethyl aluminum (TEAL) were added and stirred at 0°C for 30 minutes for activation, diisobutyl aluminum hydride (DIBAH) was added and stirred at 10°C for 30 minutes to perform alkylation, and then ethyl aluminum sesquichloride (EASC) was added and stirred at -5°C for 30 minutes to prepare a catalyst composition (NdV:TEAL:DIBAH:EASC = 1:2:15:1 molar ratio).

**Comparative Preparation Example 1**

In a hexane solvent, NdV (neodymium versatate, Nd(2-ethyl hexanoate)$_3$) and diisobutyl aluminum hydride (DIBAH) were added and stirred at 10°C for 30 minutes to perform alkylation, and then diethyl aluminum chloride (DEAC) was added and stirred at -5°C for 30 minutes to prepare a catalyst composition (NdV:DIBAH:DEAC = 1:15:3 molar ratio).

**Comparative Preparation Example 2**

In a hexane solvent, NdV (neodymium versatate, Nd(2-ethyl hexanoate)$_3$) and triisobutyl aluminum (TIBA) were added and stirred at 10°C for 30 minutes to perform alkylation, and then diethyl aluminum chloride (DEAC) was added and stirred at -5°C for 30 minutes to prepare a catalyst composition (NdV: TIBA:DEAC = 1:30:3 molar ratio).

**Examples and Comparative Examples**

**Example 1**

A conjugated diene-based polymer was prepared using a polymerization reactor in which two 80 L stainless steel reactors equipped with a stirrer and a jacket were connected in series.

While maintaining the first reactor at 80°C, 35 kg/h of hexane, 7 kg/hr of 1,3-butadiene, and the catalyst composition prepared in Preparation Example 1 (0.05 mmol NdV /100 g of 1,3-butadiene based on NdV in the catalyst composition) were introduced through the upper portion of the first reactor, and polymerization was performed for 90 minutes. At a point where a polymerization conversion ratio was 80% or higher, the resultant was transferred to the second reactor maintained at 80°C, and then polymerization was performed for additional 15 minutes. After that, the reaction was terminated by adding a hexane solution containing 1.0 g of a polymerization terminator and a hexane solution containing 2.0 g of an antioxidant, the solvent was removed through steam stripping, and the polymerization product was dried using a hot roll to produce a conjugated diene-based polymer.

**Example 2**

A conjugated diene-based polymer was prepared using a polymerization reactor in which two 80 L stainless steel reactors equipped with a stirrer and a jacket were connected in series.

While maintaining the first reactor at 85°C, 35 kg/h of hexane, 7 kg/hr of 1,3-butadiene, and the catalyst composition prepared in Preparation Example 2 (0.08 mmol/100 g of 1,3-butadiene based on NdV in the catalyst composition) were introduced through the upper portion of the first reactor, and polymerization was performed for 110 minutes. At a point where a polymerization conversion ratio was 80% or higher, the resultant was transferred to the second reactor maintained at 85°C, and polymerization was performed for additional 15 minutes. After that, a hexane solution containing 1.0 g of a polymerization terminator and a hexane solution containing 2.0 g of an antioxidant were added to terminate the reaction, the solvent was removed by steam stripping, and the polymerization product was dried using a hot roll to prepare a conjugated diene-based polymer.

**Example 3**

A conjugated diene-based polymer was prepared in the same manner as in Example 1, except that the catalyst composition prepared in Preparation Example 3 (0.04 mmol/100 g of 1,3-butadiene based on NdV in the catalyst composition) was used instead of the catalyst composition in Example 1.

**Example 4**

A conjugated diene-based polymer was prepared using a polymerization reactor in which two 80 L stainless steel reactors equipped with a stirrer and a jacket were connected in series.

While maintaining the temperature of the first reactor at 85°C, 35 kg/h of hexane, 7 kg/hr of 1,3-butadiene, and the catalyst composition prepared in Preparation Example 3 (0.11 mmol/100 g of 1,3-butadiene based on NdV in the catalyst composition) were introduced through the upper portion of the first reactor, and polymerization was performed for 110 minutes. At a point where a polymerization conversion ratio was 80% or higher, the resultant was transferred to the second reactor maintained at 85°C. In this case, 7 kg/hr of 1,3-butadiene was additionally introduced into the second reactor, and polymerization was performed for additional 15 minutes. Meanwhile, 1,3-butadiene was introduced into the first reactor at 70 wt% of the total 1,3-butadiene used in the polymer, and the remaining 30 wt% was introduced into the second reactor, and the catalyst composition was based on the total amount of 1,3-butadiene used in the polymer. After that, a hexane

solution containing 1.0 g of a polymerization terminator and a hexane solution containing 2.0 g of an antioxidant were added to terminate the reaction, the solvent was removed through steam stripping, and the polymerization product was dried using a hot roll to prepare a conjugated diene-based polymer.

**Example 5**

A conjugated diene-based polymer was prepared using a polymerization reactor in which two 80 L stainless steel reactors equipped with a stirrer and a jacket were connected in series.

While maintaining the first reactor at 80°C, 35 kg/h of hexane, 7 kg/hr of 1,3-butadiene, and the catalyst composition prepared in Preparation Example 4 (0.05 mmol/100 g of 1,3-butadiene based on NdV in the catalyst composition) were introduced through the upper portion of the first reactor, and polymerization was performed for 60 minutes. At a point where a polymerization conversion ratio was 80% or higher, the resultant was transferred to the second reactor maintained at 90°C, and polymerization was performed for additional 15 minutes. After that, a hexane solution containing 1.0 g of a polymerization terminator and a hexane solution containing 2.0 g of an antioxidant were added to terminate the reaction, the solvent was removed through steam stripping, and the polymerization product was dried using a hot roll to prepare a conjugated diene-based polymer.

**Example 6**

A conjugated diene-based polymer was prepared using a polymerization reactor in which two 80 L stainless steel reactors equipped with a stirrer and a jacket were connected in series.

While maintaining the temperature of the first reactor at 75°C, 35 kg/h of hexane, 7 kg/hr of 1,3-butadiene, and the catalyst composition prepared in Preparation Example 5 (0.12 mmol/100 g of 1,3-butadiene based on NdV in the catalyst composition) were introduced through the upper portion of the first reactor, and polymerization was performed for 110 minutes. At a point where a polymerization conversion ratio was 80% or higher, the resultant was transferred to the second reactor maintained at 80°C. In this case, 7 kg/hr of 1,3-butadiene was additionally introduced into the second reactor, and polymerization was performed for additional 15 minutes. Meanwhile, 1,3-butadiene was introduced into the first reactor at 70 wt% of the total 1,3-butadiene used in the polymer, and the remaining 30 wt% was introduced into the second reactor, and the catalyst composition was based on the total amount of 1,3-butadiene used in the polymer. After that, a hexane solution containing 1.0 g of a polymerization terminator and a hexane solution containing 2.0 g of an antioxidant were added to terminate the reaction, the solvent was removed through steam stripping, and the polymerization product was dried using a hot roll to prepare a conjugated diene-based polymer.

**Comparative Example 1**

A conjugated diene-based polymer was prepared using a polymerization reactor in which two 80 L stainless steel reactors equipped with a stirrer and a jacket were connected in series.

While maintaining the first reactor at 80°C, 35 kg/h of hexane, 7 kg/hr of 1,3-butadiene, and the catalyst composition prepared in Comparative Preparation Example 1 (0.05 mmol/100 g of 1,3-butadiene based on NdV in the catalyst composition) were introduced through the upper portion of the first reactor, and polymerization was performed for 60 minutes. At a point where a polymerization conversion ratio was 80% or higher, the resultant was transferred to the second reactor maintained at 80°C, and polymerization was performed for additional 15 minutes. After that, a hexane solution containing 1.0 g of a polymerization terminator and a hexane solution containing 2.0 g of an antioxidant were added to terminate the reaction, the solvent was removed by steam stripping, and the polymerization product was dried using a hot roll to prepare a conjugated diene-based polymer.

**Comparative Example 2**

A conjugated diene-based polymer was prepared using a polymerization reactor in which two 80 L stainless steel reactors equipped with a stirrer and a jacket were connected in series.

While maintaining the first reactor at 80°C, 35 kg/h of hexane, 7 kg/hr of 1,3-butadiene, and the catalyst composition prepared in Comparative Preparation Example 2 (0.07 mmol/100 g of 1,3-butadiene based on NdV in the catalyst composition) were introduced through the upper portion of the first reactor, and polymerization was conducted for 60 minutes. At a point where a polymerization conversion ratio was 80% or higher, the resultant was transferred to the second reactor maintained at 80°C, and polymerization was conducted for additional 15 minutes. After that, a hexane solution containing 1.0 g of a polymerization terminator and a hexane solution containing 2.0 g of an antioxidant were added to terminate the reaction, the solvent was removed by steam stripping, and the polymerization product was dried using a hot roll to prepare a conjugated diene-based polymer.

**Comparative Example 3**

A conjugated diene-based polymer was prepared using a polymerization reactor in which two 80 L stainless steel reactors equipped with a stirrer and a jacket were connected in series.

While maintaining the first reactor at 85°C, 35 kg/h of hexane, 7 kg/hr of 1,3-butadiene, and the catalyst composition prepared in Comparative Preparation Example 1 (0.064 mmol/100 g of 1,3-butadiene based on NdV in the catalyst composition) were introduced through the upper portion of the first reactor, and polymerization was performed for 110 minutes. At a point where a polymerization conversion ratio was 80% or higher, the resultant was transferred to the second reactor maintained at 90°C, and polymerization was performed for additional 15 minutes. After that, a hexane solution containing 1.0 g of a polymerization terminator and a hexane solution containing 2.0 g of an antioxidant were added to terminate the reaction, the solvent was removed by steam stripping, and the polymerization product was dried using a hot roll to prepare a conjugated diene-based polymer.

**Comparative Example 4**

A conjugated diene-based polymer was prepared using a polymerization reactor in which two 80 L stainless steel reactors equipped with a stirrer and a jacket were connected in series.

While maintaining the first reactor at 70°C, 35 kg/h of hexane, 7 kg/hr of 1,3-butadiene, and the catalyst composition prepared in Preparation Example 4 (0.044 mmol/100 g of 1,3-butadiene based on NdV in the catalyst composition) were introduced through the upper portion of the first reactor, and polymerization was performed for 60 minutes. At a point where a polymerization conversion ratio was 80% or higher, the resultant was transferred to the second reactor maintained at 75°C, and polymerization was performed for additional 15 minutes. After that, a hexane solution containing 1.0 g of a polymerization terminator and a hexane solution containing 2.0 g of an antioxidant were added to terminate the reaction, the solvent was removed through steam stripping, and the polymerization product was dried using a hot roll to prepare a conjugated diene-based polymer.

**Comparative Example 5**

A conjugated diene-based polymer was prepared using a polymerization reactor in which two 80 L stainless steel reactors equipped with a stirrer and a jacket were connected in series.

While maintaining the first reactor at 75°C, 35 kg/h of hexane, 7 kg/hr of 1,3-butadiene, and the catalyst composition prepared in Preparation Example 5 (0.06 mmol/100 g of 1,3-butadiene based on NdV in the catalyst composition) were introduced through the upper portion of the first reactor, and polymerization was performed for 60 minutes. At a point where a polymerization conversion ratio was 80% or higher, the resultant was transferred to the second reactor maintained at 80°C, and polymerization was performed for additional 15 minutes. After that, a hexane solution containing 1.0 g of a polymerization terminator and a hexane solution containing 2.0 g of an antioxidant were added to terminate the reaction, the solvent was removed through steam stripping, and the polymerization product was dried using a hot roll to prepare a conjugated diene-based polymer.

## Experimental Examples

### Experimental Example 1

For the conjugated diene-based polymers prepared in Examples 1 to 6 and Comparative Examples 1 to 5, Mooney viscosity, molecular weight distribution, cis-1,4 bond content, beta value, and height retention ratios according to Equations 1 and 2 were analyzed as follows, and the results are shown in Table 1 below.

* Mooney viscosity (ML1+4, @100°C): For each polymer, Mooney viscosity was measured at 100°C using a large rotor of Monsanto MV2000E in conditions of a rotor speed of 2±0.02 rpm. The sample used in this case was left at room temperature (23±3°C) for 30 minutes or more, and 27±3 g was collected and filled into a die cavity, and the Mooney viscosity was measured while operating the platen and applying torque.
* Molecular weight distribution (MWD): The weight average molecular weight and number average molecular weight of each polymer were measured, and the molecular weight distribution was calculated therefrom. The molecular weight of each polymer was measured by dissolving each polymer in tetrahydrofuran (THF) at 40°C for 30 minutes, loading same into a gel permeation chromatography (GPC), and flowing same. In this case, two PLgel Olexis columns and one PLgel mixed-C column from Polymer Laboratories were used in combination. In addition, all newly replaced columns were mixed bed type columns, and polystyrene was used as a gel permeation chromatography standard material (GPC Standard material).

* Cis-1,4 bond content (wt%): The cis-1,4 bond content of the conjugated diene-based moiety was measured by Fourier transform infrared spectroscopy (FT-IR). Specifically, the FT-IR transmittance spectrum of the carbon disulfide solution of the conjugated diene-based polymer prepared at a concentration of 5 mg/mL was measured using carbon disulfide of the same cell as a blank, and then the contents were obtained using the maximum peak value around 1130 $cm^{-1}$ (a, baseline) of the measured spectrum, the minimum peak value around 967 $cm^{-1}$ (b) indicating a trans-1,4 bond, the minimum peak value around 911 $cm^{-1}$ (c) indicating a vinyl bond, and the minimum peak value around 736 $cm^{-1}$ (d) indicating a cis-1,4 bond.
* Beta value (β-value): Using Montech's D-RPA 3000 (Rubber Process Analyzer), tan δ was measured at a frequency sweep range of 0 to 100 Hz, static strain of 3%, dynamic strain of 0.25%, and a measurement temperature of 100°C, and the slope of d(log(tan δ))/d(log(freq)) was expressed as the beta value.
* Height retention ratio ($\Delta H_{@20°C}$, %): 2.5 g of each conjugated diene-based polymer was used at 100°C to prepare a sample by molding into a cylindrical shape with a diameter of 15 mm and a height of 12 mm, and the sample was cooled to a temperature of 20°C to measure the initial height ($H_{0@20°C}$). While maintaining the temperature at 20°C, a load of 5 kg was applied to the upper surface of the sample, and the height was measured after 8 minutes ($H_{8@20°C}$), and the height retention ratio was calculated using Equation 1 below.

[Equation 1]

$$\Delta H_{@20°C}\ (\%) = (H_{8@20°C}/H_{0@20°C}) \times 100$$

* Height retention ratio ($\Delta H_{@40°C}$, %): Using 2.5 g of each conjugated diene-based polymer at 100°C, a sample was prepared by molding into a cylindrical shape with a diameter of 15 mm and a height of 12 mm, and the sample was cooled to a temperature of 40°C to measure the initial height ($H_{0@40°C}$), and while maintaining the temperature of 40°C, a load of 5 kg was applied to the upper surface of the sample, and the height was measured after 8 minutes ($H_{8@40°C}$), and calculated using Equation 2 below.

[Equation 2]

$$\Delta H_{@40°C}\ (\%) = (H_{8@40°C}/H_{0@40°C}) \times 100.$$

[Table 1]

| Division | Example | | | | | | Comparative Example | | | | |
|---|---|---|---|---|---|---|---|---|---|---|---|
| | 1 | 2 | 3 | 4 | 5 | 6 | 1 | 2 | 3 | 4 | 5 |
| Mooney viscosity | 47 | 48 | 46 | 45 | 45 | 47 | 45 | 45 | 45 | 46 | 48 |
| Molecular weight distribution | 2.61 | 2.72 | 2. 51 | 2. 57 | 2. 52 | 2. 54 | 3. 10 | 2.98 | 3.10 | 2.28 | 2.35 |
| Weight average molecular weight (g/mol, $\times 10^5$) | 6.72 | 6.81 | 6. 63 | 6. 30 | 6. 35 | 6. 68 | 6. 45 | 6.38 | 6.78 | 6.69 | 6.80 |
| Number | 2.57 | 2.50 | 2. | 2. | 2. | 2. | 2. | 2.14 | 2.19 | 2.93 | 2.89 |
| average molecular weight (g/mol, $\times 10^5$) | | | 64 | 45 | 52 | 63 | 08 | | | | |

(continued)

| Division | Example | | | | | | Comparative Example | | | | |
|---|---|---|---|---|---|---|---|---|---|---|---|
| | 1 | 2 | 3 | 4 | 5 | 6 | 1 | 2 | 3 | 4 | 5 |
| Cis-1,4 bond content (wt%) | 97.4 | 97.3 | 97 .1 | 97 .6 | 97 .7 | 97 .2 | 97 .6 | 97.2 | 97.4 | 97.5 | 97.4 |
| Beta value | 0.19 5 | 0.16 5 | 0. 20 0 | 0. 17 1 | 0. 19 0 | 0. 18 5 | 0. 19 0 | 0.19 5 | 0.16 8 | 0.21 5 | 0.20 7 |
| $\Delta H_{@20°C}$ (%) | 32 | 42 | 31 | 39 | 30 | 35 | 26 | 25 | 38 | 22 | 27 |
| $\Delta H_{@40°C}$ (%) | 21 | 33 | 19 | 29 | 18 | 24 | 13 | 14 | 29 | 11 | 15 |

Through Table 1 above, it was confirmed that the conjugated diene-based polymers of Examples 1 to 6 had molecular weight distribution of 2.3 to 2.8, a height retention ratio ($\Delta H_{@20°C}$, %) of 30% or more, further a height retention ratio ($\Delta H_{@40°C}$, %) of 18% or more, and a beta value of 0.2 or less, satisfying the properties suggested in the present invention.

**Experimental Example 2**

Using the conjugated diene-based polymers prepared in Examples 1 to 6 and Comparative Examples 1 to 5, rubber compositions and rubber specimens were prepared, and then the Mooney viscosity, tensile properties, viscoelastic properties, and abrasion resistance of the rubber compositions were measured using the methods below, and the results are shown in Table 2 below.

<Formation of Rubber Compositions and Rubber Specimens>

Each rubber composition was prepared by mixing 100 parts by weight of each of the conjugated diene-based polymers of Examples 1 to 6 and Comparative Examples 1 to 5 with 60 parts by weight of carbon black, 15 parts by weight of process oil (TDAE oil), 3 parts by weight of zinc oxide (ZnO), and 2 parts by weight of stearic acid.

After that, 1.5 parts by weight of sulfur and 0.9 parts by weight of vulcanization accelerator (TBBS) were added to each of the rubber compositions, and gently mixed at 50 rpm for 2 minutes at 50°C, and then a sheet-shaped vulcanized mixture was obtained using a 50°C roll. The obtained vulcanized mixture was vulcanized at 160°C for 20 minutes to prepare a rubber specimen.

* Mooney viscosity (ML1+4, @100°C): For each rubber composition, Mooney viscosity was measured using a Monsanto MV2000E Large Rotor at 100°C at a rotor speed of 2±0.02 rpm. The sample used in this case was left at room temperature (23±3°C) for 30 minutes or more, and 27±3 g was collected and filled inside a die cavity, and the platen was operated to apply torque while measuring Mooney viscosity. In addition, the difference (ΔMV) between the Mooney viscosity of the measured rubber composition and the Mooney viscosity of the conjugated diene-based polymer measured in Experimental Example 1 was calculated.

In addition, the measured value of Comparative Example 1 was used as the reference value, and the difference in the Mooney viscosity of each Example and Comparative Example was indexed using Equation 3 below, and the processability was confirmed by the value, and a larger value means better.

Processability = {[(reference value - measured value)/reference value] x 100} + 100 [Equation 3]

* Tensile properties: After vulcanizing each rubber composition prepared above at 150°C for t90 minutes, the modulus (M-300%, kg·f/$cm^2$) at 300% elongation of the vulcanized product was measured according to ASTM D412. The measured value of Comparative Example 1 was used as the reference value, and the 300% modulus of each Example and Comparative Example was indexed using Equation 4 below. The higher the value, the better it is.

[Equation 4]

M-300% Index = (measured value/reference value) x 100

* Viscoelastic properties: Using DMTS 500N from Gabo, Germany, a viscoelastic coefficient (Tan $\delta$) at -60°C to 60°C was measured at a frequency of 10 Hz, a prestrain of 3%, and a dynamic strain of 3%. In this case, the Tan $\delta$ value at 60°C represents the rolling resistance characteristics (fuel efficiency). The measured value of Comparative Example 1 was used as the reference value, and the viscoelastic properties of each Example and Comparative Example were indexed using Equation 5 below.

Tan $\delta$ @60°C Index = {[(reference value - measured value)/reference value] x 100} + 100 [Equation 5]

* Abrasion resistance: For each rubber specimen formed above, a DIN abrasion test was performed according to ASTM D5963, and the DIN wt loss index (loss volume index: ARIA (Abrasion resistance index, Method A)) was expressed. The measured value of Comparative Example 1 was used as the reference value, and the abrasion resistance of each Example and Comparative Example was indexed using Equation 6 below.

Abrasion amount Index = {[(reference value-measured value)/reference value] x 100} + 100. [Equation 6]

[Table 2]

| Division | | Example | | | | | | Comparative Example | | | | |
|---|---|---|---|---|---|---|---|---|---|---|---|---|
| | | 1 | 2 | 3 | 4 | 5 | 6 | 1 | 2 | 3 | 4 | 5 |
| ΔMV | | 16 | 15 | 16 | 16 | 15 | 17 | 20 | 19 | 17 | 23 | 21 |
| Processability (index, %) | | 12 0 | 12 5 | 12 0 | 12 0 | 12 5 | 11 5 | 10 0 | 10 5 | 11 5 | 85 | 95 |
| Tensil e proper ties | M-300% (kg·f/cm$^2$ | 85 | 84 | 86 | 85 | 85 | 84 | 85 | 86 | 78 | 87 | 84 |
| | M-300% index (%) | 10 0 | 99 | 10 1 | 10 0 | 10 0 | 99 | 10 0 | 10 1 | 92 | 10 2 | 10 1 |
| Viscoe lastic ity | Tan δ @60°C | 0. 21 0 | 0. 21 5 | 0. 21 1 | 0. 21 4 | 0. 20 6 | 0. 21 5 | 0. 21 1 | 0. 21 3 | 0. 22 4 | 0. 20 3 | 0. 20 7 |
| | Tan δ @60°C index (%) | 10 0 | 98 | 10 0 | 99 | 10 2 | 98 | 10 0 | 99 | 94 | 10 4 | 10 2 |
| Abrasi on resist ance | Abrasion amount (mg) | 24 .8 | 24 .8 | 25 .6 | 25 .3 | 25 .6 | 25 .1 | 26 .1 | 25 .8 | 26 .6 | 26 .2 | 25 .9 |
| | Abrasion amount index (%) | 10 5 | 10 5 | 10 2 | 10 3 | 10 2 | 10 4 | 10 0 | 10 1 | 98 | 10 0 | 99 |

As shown in Table 2 above, Examples 1 to 6 showed improved abrasion resistance and significantly increased processability while maintaining the tensile properties and viscoelastic properties at the same level as Comparative Examples 1 to 5.

From the results, it was confirmed that the conjugated diene-based polymer of the present invention exhibits improved processability while maintaining the properties of the conjugated diene-based polymer except for processability at the level of a highly linear conjugated diene-based polymer and maintaining mixing properties in the rubber composition at a high level, by introducing a branch into the linear conjugated diene-based polymer.

## Claims

1. A conjugated diene-based polymer:

   comprising a conjugated diene-based monomer unit,
   having a cis bond content of 95.0 wt% or more,
   having molecular weight distribution (Mw/Mn) of 2.3 to 2.8, and
   having a height retention ratio ($\Delta H_{@20^\circ C}$) calculated by the following Equation 1 of 30% or more:

   [Equation 1]

   $$\Delta H_{@20^\circ C}\ (\%) = (H_{8@20^\circ C}/H_{0@20^\circ C}) \times 100$$

   in Equation 1,
   $H_{0@20^\circ C}$ is an initial height measured by preparing a sample by molding 2.5 g of a conjugated diene-based polymer at 100°C into a cylindrical shape with a diameter of 15 mm and a height of 12 mm, and cooling the sample to a temperature of 20°C, and
   $H_{8@20^\circ C}$ is a height of the sample measured after 8 minutes of applying a load of 5 kg to an upper surface of the sample while maintaining the temperature of 20°C.

2. The conjugated diene-based polymer according to claim 1, wherein the height retention ratio ($\Delta H_{@20^\circ C}$) calculated by Equation 1 is 35% or more.

3. The conjugated diene-based polymer according to claim 1, wherein a height retention ratio ($\Delta H_{@40^\circ C}$) calculated by the following Equation 2 is 18% or more:

   [Equation 2]

   $$\Delta H_{@40^\circ C}\ (\%) = (H_{8@40^\circ C}/H_{0@40^\circ C}) \times 100$$

   in Equation 2,

   $H_{0@40^\circ C}$ is an initial height measured by preparing a sample by molding 2.5 g of a conjugated diene-based polymer at 100°C into a cylindrical shape with a diameter of 15 mm and a height of 12 mm, and cooling the sample to a temperature of 40°C, and
   $H_{8@40^\circ C}$ is a height of the sample measured after 8 minutes of applying a load of 5 kg to an upper surface of the sample while maintaining the temperature of 40°C.

4. The conjugated diene-based polymer according to claim 3, wherein the height retention ratio ($\Delta H_{@40^\circ C}$) calculated by Equation 2 is 24% or more.

5. The conjugated diene-based polymer according to claim 1, wherein a beta value measured at 100°C is 0.2 or less.

6. The conjugated diene-based polymer according to claim 1, wherein the molecular weight distribution (Mw/Mn) is 2.5 to 2.8.

7. The conjugated diene-based polymer according to claim 1, wherein a Mooney viscosity (ML1+4 @100°C) measured at 100°C is 40 to 50.

**8.** The conjugated diene-based polymer according to claim 1, wherein a weight average molecular weight of the conjugated d iene-based polymer is 500,000 g/mol to 800,000 g/mol.

**9.** A rubber composition comprising the conjugated diene-based polymer according to any one of claims 1 to 8.

## INTERNATIONAL SEARCH REPORT

International application No.
**PCT/KR2024/017098**

**A. CLASSIFICATION OF SUBJECT MATTER**

**C08F 36/06**(2006.01)i; **C08F 4/52**(2006.01)i; **C08F 2/00**(2006.01)i; **C08F 136/06**(2006.01)i

According to International Patent Classification (IPC) or to both national classification and IPC

**B. FIELDS SEARCHED**

Minimum documentation searched (classification system followed by classification symbols)

C08F 36/06(2006.01); C08F 136/06(2006.01); C08F 2/02(2006.01); C08F 2/38(2006.01); C08F 236/06(2006.01); C08F 236/10(2006.01); C08F 36/04(2006.01); C08F 4/54(2006.01); C08F 4/602(2006.01); C08K 3/36(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 공액디엔계 중합체(conjugated diene polymer), 시스결합(cis bond), 분자량 분포(molecular weight distribution), 높이유지율(height retention), 촉매(catalyst), 고무(rubber)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2022-0041637 A (LG CHEM, LTD.) 01 April 2022 (2022-04-01) See claims 1-16; paragraphs [0034] and [0194]-[0200]; and table 2 (example 1). | 1-9 |
| Y | JP 2006-274219 A (NIPPON ZEON CO., LTD.) 12 October 2006 (2006-10-12) See paragraphs [0036]-[0039], [0077] and [0078]. | 1-9 |
| A | KR 10-2018-0101619 A (BRIDGESTONE CORPORATION) 12 September 2018 (2018-09-12) See claims 1-16. | 1-9 |
| A | US 2016-0009834 A1 (UBE INDUSTRIES, LTD.) 14 January 2016 (2016-01-14) See claims 1-16. | 1-9 |
| A | US 2013-0210994 A1 (KAITA, S. et al.) 15 August 2013 (2013-08-15) See claims 1-13. | 1-9 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 February 2025** | **10 February 2025** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/017098**

| Patent document cited in search report | Publication date (day/month/year) | Patent family member(s) | Publication date (day/month/year) |
|---|---|---|---|
| KR 10-2022-0041637 A | 01 April 2022 | None | |
| JP 2006-274219 A | 12 October 2006 | JP 5072191 B2 | 14 November 2012 |
| KR 10-2018-0101619 A | 12 September 2018 | CN 103596997 A | 19 February 2014 |
| | | CN 103596997 B | 24 August 2016 |
| | | EP 2707403 A1 | 19 March 2014 |
| | | EP 2707403 B1 | 29 July 2015 |
| | | JP 2014-513741 A | 05 June 2014 |
| | | JP 5714179 B2 | 07 May 2015 |
| | | KR 10-1896136 B1 | 07 September 2018 |
| | | KR 10-1986201 B1 | 07 June 2019 |
| | | KR 10-2014-0026542 A | 05 March 2014 |
| | | US 2014-0073751 A1 | 13 March 2014 |
| | | US 9803032 B2 | 31 October 2017 |
| | | WO 2012-154721 A1 | 15 November 2012 |
| US 2016-0009834 A1 | 14 January 2016 | CN 105121478 A | 02 December 2015 |
| | | EP 2966098 A1 | 13 January 2016 |
| | | EP 2966098 A4 | 30 March 2016 |
| | | EP 2966098 B1 | 12 July 2017 |
| | | JP 2017-136963 A1 | 16 February 2017 |
| | | JP 6394589 B2 | 26 September 2018 |
| | | KR 10-2015-0126909 A | 13 November 2015 |
| | | KR 10-2097184 B1 | 03 April 2020 |
| | | WO 2014-136963 A1 | 12 September 2014 |
| US 2013-0210994 A1 | 15 August 2013 | CN 103154058 A | 12 June 2013 |
| | | CN 103154058 B | 16 December 2015 |
| | | EP 2599805 A1 | 05 June 2013 |
| | | EP 2599805 A4 | 06 August 2014 |
| | | EP 2599805 B1 | 13 January 2016 |
| | | JP 2013-014463 A1 | 12 September 2013 |
| | | JP 5918134 B2 | 18 May 2016 |
| | | US 8962743 B2 | 24 February 2015 |
| | | WO 2012-014463 A1 | 02 February 2012 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020230149216
- KR 1020240028978
- US 9056303 B2